**Europäisches Patentamt**

**European Patent Office**

**Office européen des brevets**

(11) Veröffentlichungsnummer: **0 512 457 A1**

## EUROPÄISCHE PATENTANMELDUNG

(21) Anmeldenummer: **92107501.6**

(22) Anmeldetag: **04.05.92**

(51) Int. Cl.⁵: **H04Q 11/04**, H04Q 1/24, H04M 3/24

(30) Priorität: **08.05.91 DE 4115079**

(43) Veröffentlichungstag der Anmeldung:
**11.11.92 Patentblatt 92/46**

(84) Benannte Vertragsstaaten:
**AT BE CH DE DK ES FR GB GR IT LI NL SE**

(71) Anmelder: **SIEMENS AKTIENGESELLSCHAFT**
**Wittelsbacherplatz 2**
**W-8000 München 2(DE)**

(72) Erfinder: **Labusch, Reinhard, Dipl.-Ing.**
**Peter-Rosegger-Strasse 25**
**W-8905 Mering(DE)**

(54) Verfahren und Anordnung zur Überwachung von Koppelwegen in einem Koppelfeld.

(57) Koppelwege in einem Koppelfeld (1) mit Raum-Zeitkopplern wurden bisher in Betriebspausen überprüft, wodurch die Verfügbarkeit eingeschränkt wird. Das neue Verfahren soll eine In-Betrieb-Überwachung ermöglichen. Eine Koppelfeldsteuerung (8) verbindet die Eingänge eines Vergleichers 9 nacheinander mit Eingang (2 bis 4) und Ausgang (5 bis 6) jedes Koppelweges. Der Vergleicher (9) vergleicht die während des Meßzeitraums zeitschlitz- oder rahmenweise auftretenden digitalen Daten und gibt bei Nichtübereinstimmung einen Alarm ab. Bei fehlenden Polaritätswechseln in den Daten kann die Funktionsfähigkeit eines Koppelweges vorgetäuscht werden. Die ankommenden Daten werden daher auch einer Meldeeinrichtung (14) zugeführt, die ausbleibende Polaritätswechsel erkennt und meldet. Der Vergleich kann dann verlängert oder außerplanmäßig wiederholt werden. Das Verfahren ist für alle Koppelfelder, insbesondere solche im Crossconnect-Multiplexsystemen geeignet.

FIG 1

Die Erfindung bezieht sich auf ein Verfahren zur Überwachung von Koppelwegen in einem Koppelfeld für Digitalsignale, das aus wenigstens einem Zeitkoppler und/oder aus wenigstens einem Raumkoppler besteht und bei dem jeder Koppelweg von einer Koppelfeldsteuerung für einen Koppelzeitraum eingestellt wird.

Koppelfelder sind beispielsweise aus dem Taschenbuch "Digitale Nachrichtenübertragung", Teil 2, Crossconnect-und Multiplextechnik, 1990, Siemens AG, Bestell-Nr. A19100-L531-F302, Seiten 38 bis 44 bekannt. Sie enthalten Raum- und Zeitkoppler und sind in unterschiedlicher Stufenzahl aufgebaut. Zeitschlitzgesteuerte Raumkoppler verteilen in den Zeitschlitzen eines Multiplexsignals enthaltene Codewörter auf beliebige Ausgänge. Zeitkoppler vertauschen die Codewörter dagegen innerhalb eines Rahmens und schalten sie lediglich zu einem Ausgang durch. Raum-Zeitkoppler können die Codewörter dagegen sowohl zeitlich umordnen als auch beliebigen Ausgängen zuführen. Eine Überwachung der Koppelwege ist in Betriebspausen möglich.

Der im Anspruch 1 angegebenen Erfindung liegt das Problem zugrunde, diese Überwachung während des Betriebes durchzuführen. Außerdem soll mit der im Anspruch 2 angegebenen Weiterbildung der Erfindung die Vortäuschung einer Überprüfung beim Empfang von Dauer-"1"- oder Dauer-"0"-Signalen vermieden werden.

Ein mit der Erfindung erzielter Vorteil besteht in einer In-Betrieb-Überwachung auf Identität ankommender und abgehender Daten für jede Bitposition innerhalb eines überwachten Zeitabschnitts ohne Beeinträchtigung des bestehenden Übertragungsbetriebs. Ein weiterer Vorteil besteht in der gleichzeitigen Überwachung auf Polaritätswechsel.

Eine vorteilhafte Ausgestaltung der Erfindung ist im Anspruch 3 angegeben. Eine Anordnung zur Durchführung des Verfahrens ist den Ansprüchen 4 bis 7 zu entnehmen.

Ein Ausführungsbeispiel der Erfindung ist in der Zeichnung dargestellt und wird im folgenden näher beschrieben.

Es zeigen:

Figur 1    eine erfindungsgemäße Anordnung und

Figur 2    eine Meldeeinrichtung

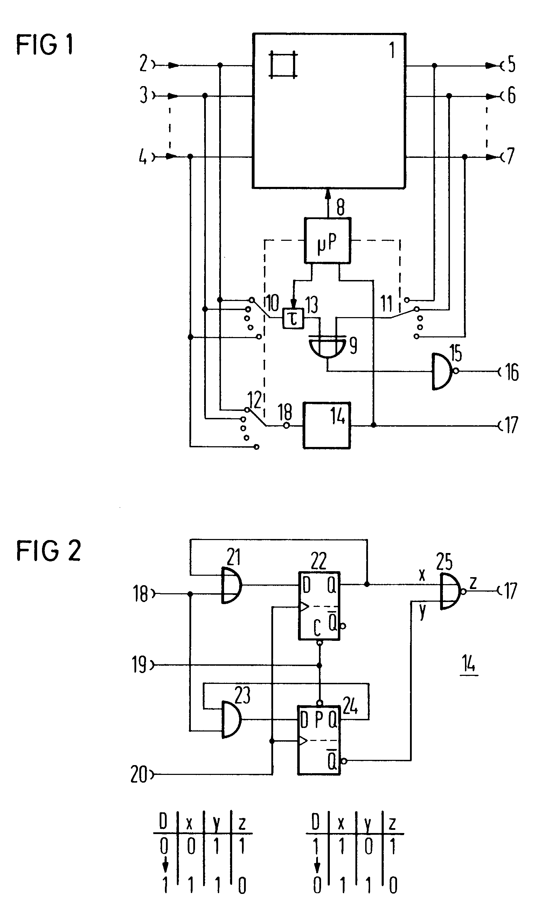

Die Figur 1 zeigt die erfindungsgemäße Anordnung mit einem an sich bekannten Koppelfeld 1 mit Eingängen 2 bis 4 und Ausgängen 5 bis 7, eine an sich bekannte Koppelfeldsteuerung 8 in Form eines Mikroprozessors, ein Exklusiv-ODER-Gatter 9, elektronische Umschalter 10 bis 12, ein steuerbares Verzögerungsglied 13, eine Meldeeinrichtung 14 und einen Inverter 15. Die Aufgaben der Umschalter 10 bis 12 kann der Mikroprozessor mit übernehmen.

Die Koppelfeldsteuerung 8 schaltet zeitschlitzweise oder auch für eine Rahmenlänge Koppelwege zwischen einem der Eingänge 2 bis 4 und einem beliebigen Ausgang 5 bis 7 durch. Gleichzeitig legt sie sukzessive jeden Eingang eines Koppelweges über das Verzögerungsglied 13 an einen Eingang und jeden zugehörigen Ausgang an den anderen Eingang des Exklusiv-ODER-Gatters 9. Die von der Koppelfeldsteuerung 8 eingestellte Verzögerungszeit $\tau$ berücksichtigt die Laufzeit durch den jeweiligen Koppelweg. In Figur 1 ist gerade der Eingang 2 über den Umschalter 10, das Verzögerungsglied 13 und den Umschalter 11 mit dem Ausgang 6 verbunden.

Solange an den Eingängen des Exklusiv-ODER-Gatters 9 Bitgleichheit besteht, tritt an dessen Ausgang eine logische "0" und infolge des Inverters 15 an einem Alarmausgang 16 eine logische "1" auf. Bei Bitungleichheit gibt das Exklusiv-ODER-Gatter 9 dagegen eine logische "1" ab und am Alarmausgang 16 erscheint eine logische "0".

Die Koppelfeldsteuerung 8 verbindet einen Dateneingang 18 der Meldeeinrichtung 14 über den Umschalter 12 synchron zum Umschalter 10 mit einem der Eingänge 2 bis 4 des Koppelfeldes 1. Solange kein logischer Zustandswechsel auftritt, liegt an einem Meldeausgang 17 eine logische "1". Beim ersten Polaritätswechsel am Dateneingang 18 der Meldeeinrichtung 14 erfolgt am Meldeausgang 17 ein Zustanoswechsel. Dieser wird der Koppelfeldsteuerung 8 mitgeteilt, die die Verlängerung der Vergleichszeit oder einen außerplanmäßigen Vergleich veranlassen kann, falls der Zustandswechsel nicht stattgefunden hat.

Figur 2 zeigt eine Meldeeinrichtung 14. Sie enthält ein ODER-Gatter 21, D-Flipflops 22 und 24, ein UND-Gatter 23 und ein NAND-Gatter 25.

Die binären Zustände sind an dem Dateneingang 18 mit D, an den beiden Eingängen des NAND-Gatters 25 mit x und y und am Ausgang des NAND-Gatters 25 mit z bezeichnet. Diese Bezeichnungen finden sich in den beiden Tabellen in Figur 2 unten wieder. Die linke Tabelle zeigt einen Übergang von D = logisch "0" auf D = logisch "1" und die rechte Tabelle einen Übergang von D = logisch "1" auf D = logisch "0". Logische Zustände werden im folgenden kurz mit "1" oder "0" bezeichnet.

Beim Start wird ein negativer Impuls an einen Starteingang 19 angelegt. Dieser setzt das D-Flipflop 22 zurück, so daß an dessen Q-Ausgang eine "0" erscheint, und setzt das D-Flipflop 24, so daß an dessen Q-Ausgang eine "1" auftritt.

Liegt jetzt am Dateneingang 18 ständig "0", dann tritt am Ausgang des ODER-Gatters 21 ebenfalls eine "0" auf. Die "0" am Ausgang des ODER-Gatters 21 und am Q-Ausgang 22 bleibt; x ist also "0". Andauernd "0" bewirkt dagegen am Ausgang des UND-Gatters 23 ebenfalls eine "0" und am Q-Ausgang des D-Flipflops 24 erfolgt mit einem Takt an einem Takteingang 20 ein Zustandswechsel auf "0". Dieser logische Zustand hält sich wegen des UND-Gatters 23. Am $\overline{Q}$-Ausgang des D-Flipflops 23 tritt dadurch eine "1" auf und y ist demzufolge "1". Bei x = "0" und y = "1" ist z = "1". Erfolgt am Dateneingang 18 ein Zustandswechsel auf "1", dann überträgt sich dieser Zustand auf den Ausgang des ODER-Gatters 21 und den Q-Ausgang des D-Flipflops 22. x geht auf "1" über und verharrt dort. Am Ausgang des UND-Gatters 23 tritt jedoch keine Änderung auf, so daß y gleich "1" bleibt. Da jetzt sowohl x als auch y auf "1" übergehen, erfolgt ein Zustandswechsel für z.

Liegt nach dem Start am Dateneingang 18 anhaltend eine "1", dann bewirkt diese am Ausgang des ODER-Gatters 21 ebenfalls eine "1" und wird mit dem Takt zum Q-Ausgang des D-Flipflops 22 weitergegeben. x ist demzufolge "1". Die "1" überträgt sich auf den Ausgang des UND-Gatters 23 und erhält die "1" am Q-Ausgang des D-Flipflops 24 aufrecht, so daß am $\overline{Q}$-Ausgang des D-Flipflops 24 eine "0" anliegt. Ist x gleich "1" und y gleich "0", dann ist z gleich "1". Geht jetzt am Dateneingang 18 der Zustand auf "0" über, dann ist der Zustand am Ausgang des ODER-Gatters 21 unverändert "1" und auch x bleibt "1". Der Zustand am Ausgang des UND-Gatters 23 ändert sich jetzt und der Q-Ausgang des D-Flipflops 24 geht auf "0" über. Am $\overline{Q}$-Ausgang des D-Flipflops 24 erfolgt infolgedessen ein Zustandswechsel auf "1". Da jetzt sowohl x als auch y gleich "1" sind, kippt z von "1" auf "0". Der Meldeausgang 17 teilt auf diese Weise mit, daß ein Polaritätswechsel stattgefunden hat.

**Patentansprüche**

1. Verfahren zur Überwachung von Koppelwegen in einem Koppelfeld für Zeitmultiplexsignale, das aus wenigstens einem Zeitkoppler und/oder aus wenigstens einem Raumkoppler besteht und bei dem jeder Koppelweg von einer Koppelfeldsteuerung für einen Koppelzeitraum eingestellt wird,
   **dadurch gekennzeichnet**,
   daß während des Betriebs, von der Koppelfeldsteuerung gesteuert, nacheinander an allen belegten Koppelwegeingängen die jeweils ankommenden, ständig oder zeitschlitzweise auftretenden Daten und die vom jeweiligen Koppelwegausgang abgehenden, selben Daten bitweise verglichen werden und
   daß bei Nichtübereinstimmung ein Alarm für diesen Koppelweg abgegeben wird.

2. Verfahren nach Anspruch 1,
   **dadurch gekennzeichnet**,
   daß die jeweils ankommenden und dem Vergleich zugeführten Daten auf das Auftreten logischer Zustandswechsel überprüft werden und
   daß ein Nichtauftreten gemeldet wird.

3. Verfahren nach Anspruch 2,
   **dadurch gekennzeichnet**,
   daß der Vergleich und die Überprüfung verlängert oder außer der Reihe wiederholt wird.

4. Anordnung mit einem Koppelfeld (1) und einer Koppelfeldsteuerung (8) zur Durchführung des Verfahrens nach Anspruch 1,
   **dadurch gekennzeichnet**,
   daß ein Vergleicher (9) vorgesehen ist, dessen erster Eingang über ein einstellbares Verzögerungsglied (13) und über einen ersten, von der Koppelfeldsteuerung (8) gesteuerten Umschalter (10) mit den Eingängen (2-4) des Koppelfeldes (1) verbunden ist, dessen zweiter Eingang über einen zweiten, von der Koppelfeldsteuerung (8) gesteuerten Umschalter (11) mit den Ausgängen (5 bis 7) des Koppelfeldes (1) verbunden ist und dessen Ausgang mit einem Alarmausgang (16) verbunden ist.

5. Anordnung nach Anspruch 4,
   **dadurch gekennzeichnet**,
   daß eine Meldeeinrichtung (14) vorgesehen ist, deren Eingang (18) über einen dritten, von der Koppelfeldsteuerung (8) gesteuerter Umschalter (12) mit den Eingängen (2-4) des Koppelfeldes (1) und deren Ausgang mit einem Meldeausgang (17) verbunden ist.

6. Anordnung nach Anspruch 4,
   **dadurch gekennzeichnet**,
   daß als Meldeeinrichtung (14) zum Melden ausbleibender logischer Zustandswechsel ein erstes D-Flipflop (22) vorgesehen ist, dessen Setzeingang mit einem Starteingang (19) verbunden ist,
   ein ODER-Gatter (21) vorgesehen ist, dessen erster Eingang mit dem Q-Ausgang des ersten D-Flipflops (22), dessen zweiter Eingang mit einem Dateneingang (18) und dessen Ausgang mit dem D-Eingang des ersten D-Flipflops (22) verbunden ist,
   ein zweites D-Flipflop (24) vorgesehen ist, dessen Rücksetzeingang mit einem Starteingang (19) verbunden ist,
   ein UND-Gatter (23) vorgesehen ist, dessen erster Eingang mit dem Q-Ausgang des zweiten D-Flipflops (24), dessen zweiter Eingang mit dem Dateneingang (18) und dessen Ausgang mit dem D-Eingang des zweiten D-Flipflops (24) verbunden ist, und
ein NAND-Gatter (25) vorgesehen ist, dessen erster Eingang mit dem Q-Ausgang des ersten D-Flipflops (22), dessen zweiter Eingang mit dem $\overline{Q}$-Ausgang des zweiten D-Flipflops (24) und dessen Ausgang mit dem Meldeausgang (17) verbunden ist.

7. Anordnung zur Durchführung des Verfahrens nach Anspruch 4,
**dadurch gekennzeichnet**,
daß als Vergleicher (9) ein Exklusiv-ODER-Gatter vorgesehen ist.

FIG 1

FIG 2

| D | x | y | z |
|---|---|---|---|
| 0 | 0 | 1 | 1 |
| ↓ |   |   |   |
| 1 | 1 | 1 | 0 |

| D | x | y | z |
|---|---|---|---|
| 1 | 1 | 0 | 1 |
| ↓ |   |   |   |
| 0 | 1 | 1 | 0 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 012 642 (LMT,THOMSON-CSF) | 1-5 | H04Q11/04 |
| A | * Gesamtes Dokument * | 6,7 | H04Q1/24 |
| | --- | | H04M3/24 |
| X | EP-A-0 027 226 (CIT-ALCATEL) | 1,2 | |
| A | * Gesamtes Dokument * | 3-7 | |
| | --- | | |
| X | FR-A-2 305 907 (LMT) | 1,2 | |
| A | * Gesamtes Dokument * | 3-7 | |
| | --- | | |
| X | FR-A-2 258 069 (LMT) | 1,2,4,5 | |
| A | * Gesamtes Dokument * | 3,6,7 | |
| | --- | | |
| X | FR-A-2 399 162 (S.A.T.) | 1,2,4,5 | |
| A | * Seite 4, Zeile 36 - Seite 6, Zeile 4 * | 3,6,7 | |
| | --- | | |
| X | FR-A-2 409 651 (CGCT) | 1-5 | |
| A | * Seite 5, Zeile 10 - Seite 6, Zeile 27 * | 6,7 | |
| | * Seite 10, Zeile 18 - Zeile 24 * | | |
| | * Seite 10, Zeile 38 - Seite 14, Zeile 35 * | | |
| | ----- | | |

**RECHERCHIERTE SACHGEBIETE (Int. Cl.5)**

H04Q
H04M

Der vorliegende Recherchenbericht wurde für alle Patentansprüche erstellt

| Recherchenort | Abschlußdatum der Recherche | Prüfer |
|---|---|---|
| DEN HAAG | 13 AUGUST 1992 | DE MUYT H.A. |